# EUROPEAN PATENT SPECIFICATION

(11) **EP 3 182 580 B1**
(45) Date of publication and mention of the grant of the patent: **28.08.2024**
(21) Application number: 15460114.0
(22) Date of filing: 15.12.2015
(51) Int. Cl.: H02S 20/26, E04F 13/08

(54) **A SET OF STRUCTURAL ELEMENTS SUITABLE TO DETACHABLY CONNECT A PHOTOVOLTAIC MODULE OF A VENTILATED FACADE TO AN INSULATED FRONT WALL OF A BUILDING**
EINE REIHE VON STRUKTURELEMENTEN, DIE EIN PHOTOVOLTAIKMODUL EINER LÜFTETEN FASSADE LÖSBAR MIT EINER ISOLIERTEN VORDERWAND EINES GEBÄUDES ZU VERBINDEN
ENSEMBLE D'ÉLÉMENTS STRUCTURELS ADAPTÉS POUR RELIER DE MANIÈRE AMOVIBLE UN MODULE PHOTOVOLTAÏQUE D'UNE FAÇADE VENTILÉE À UNE PAROI AVANT ISOLÉE D'UN BÂTIMENT

(43) Date of publication of application: 21.06.2017
(73) Proprietor: ML SYSTEM Spólka Akcyjna, 36-062 Zaczernie (PL); ML SYSTEM + Spolka z organiczona odpowiedzialnoscia, 36-062 Zaczernie (PL)
(72) Inventor: CYCON, Dawid, 35-317 Rzeszów (PL); STANEK, Olga, 35-506 Rzeszów (PL); STANEK, Edyta, 35-317 Rzeszów (PL)
(74) Representative: Warzybok, Tadeusz

(56) References cited:
- EP-A2- 0 419 775
- WO-A1-2012/043967
- WO-A2-2009/015106
- WO-A2-2010/130952
- DE-A1- 102004 055 187
- DE-A1- 4 014 200
- DE-U1- 202008 015 237
- US-A1- 2010 258 158
- US-A1- 2012 145 227

## Description

The subject of the invention is a set of structural elements suitable to detachably connect a photovoltaic module of a ventilated facade to an insulated front wall of a building.

Ventilated facades enable free circulation of air between an outer plate structure and an insulation layer of the building, protecting at the same time the building walls from absorbing rainwater.

Description of the prior art included in patent EP 2143149 contains information that when equipping buildings, especially residential houses, with electric power generators utilising solar energy, the sets of panels composed of a number of photovoltaic modules are disposed, typically on roofs of the buildings. The panels are usually composed of the stacks of different layers of glass, silicone, conductors, and polymers. Silicone cells, usually square-shaped, have the length of the sides up to 200-mm and are connected with each other in series, and then encapsulated between two glass panes, or between a glass pane and various polymer layers. For instance, a module with the rated voltage 12 V is typically constructed by connecting 36 monocrystalline or polycrystalline cells in series. Such units of 36 cells are then connected in parallel.

Therefore, 72 silicon cells are used in case of a 24 V module. Such panels, or modules, have a front surface made of a glass pane oriented towards the Sun, designed to absorb the sunlight in a way allowing the light to interact with silicon cells and generate electric current. The glass pane is used at the same time to protect photovoltaic cells against various factors, especially of atmospheric origin.

The back surface of these modules, or panels, can be opaque, composed of a stack of polymers designed to protect the cells against mechanical damage and corrosion, or transparent, in which case a glass pane also constitutes the back surface. Such well-known photovoltaic modules, or panels, are disposed on the frames, the posts of which are usually made of aluminium sections joined together to form structures with appropriate stiffness and mechanical strength, and moreover, the panels are connected to each other and to a distribution circuit designed to provide power to electrical appliances. Photovoltaic panels of that type can also be disposed on building facades, however mounting them on an appropriate framework usually requires a large amount of effort.

The known photovoltaic wall-mounted facade, type FSE-380, offered by German company Schüco Int. KG, is composed of thin-layered solar modules, especially the glass ones, secured to a face wall of the building at four points, and can be extended with additional modules, whereas the modules can be made of glass, silicon, or aluminium.

Patent DE 4140458A1 also reveals a facade design comprising an inner structure in the form of a frame composed of posts and braces joined with them. The frame is joined permanently with the building and is used to fix the facade components, particularly the glass pane elements made of multi-layered glass and mounted in frames. The outer finishing of the facade comprises the fastening slats made of metal sections and joined detachably with the frame by means of screws. The fixing slats retain the facade elements in the frame and cover tightly the gaps occurring between neighbouring facade elements. To this end, sealing elements are disposed in the grooves provided alongside the frame and the fixing slats.

In the above-described design, the frame made of posts and braces is constructed as a load-bearing structure, i.e. the frame constitutes a structural part of the building, and facade elements are disposed on the frame. Assembling the facade requires mounting the posts and the load-bearing braces to the external surface of the building, whereas the facade components are mounted on the frame by means of screws. Assembly of such facade structure is labour-consuming, especially in view of the necessity to join the facade elements by means of screws on the construction site.

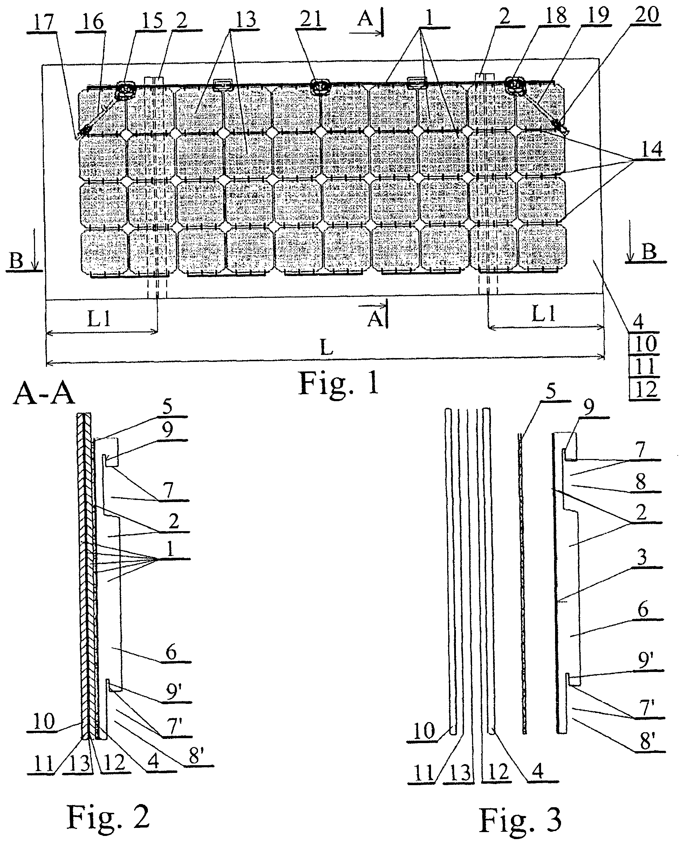

From the patent WO2012043967A1, an integrated structure of an interior/exterior material and a heat insulating material having a fixed shape in an open joint system, and open joint system using the same, are also known, in which according to the drawings (fig. 1 - fig. 3) the rear frame is situated between the rear wall of the building provided with a thermal insulation and an external stone, ceramic, wooden, or aluminium panel connected to the connecting beam, with means of an anchor embedded in this external wall having an angular connector provided on it. In turn, this T-shaped connecting beam has two hook offsets on its web, connected to the rear frame, which is attached to the rear wall by means of an anchor.

Patent. DE 4014200 A1 discloses a photovoltaic solar generator comprising solar cells disposed in a plastic, in particular a laminate with solar cells, which has a cover in the form of a glass pane and is characterised in that the rear side of the solar generator is provided with factory-made U-shaped mounting sections, and the joint between the rear side of the generator and the U-shaped sections is realised with the use of elastic joining bridges and elastic spacers, whereas the mounting sections can be glued to the rear side of the generator, and the front glass pane serves as its cover.

Further, from patent US 2012/0145227 A1 a frame system for a solar cell module is known, having a first frame member configured to be fixed to a substrate of the solar cell module, having the lower light-transmitting substrate, the upper light-transmitting substrate, a plurality of solar cells disposed between the two substrates, and a sealing layer that is positioned between the solar cells and the upper light-transmitting substrate. The lower light-transmitting substrate is made of glass or a polymer resin, and the upper light-transmitting substrate can also be made of glass or a transparent polymer film.

The purpose of the present invention is to provide a set of structural elements which, by easy and simple joining them with each other, and with the photovoltaic module of the ventilated facade, as well as with the insulated wall of the building, enable an easy and detachable connection of this module to the building wall. Another purpose of the present invention is to develop such a set of these structural elements, that is adapted to the construction of an universal photovoltaic module of the frameless ventilated facade, which provides an eye-catching facade or front wall of the building with beneficial aesthetic feelings, as well as the use of their sunlit surfaces for the production of electric power, precisely to provide a module adapted to the use in newly designed and existing structural elements, irrespectively to their shape, size and materials, from which such building has been made or will be made.

The set of structural elements suitable to detachably connect a photovoltaic module of a ventilated facade to an insulated front wall of a building according to the invention, comprising load-bearing aluminium T-sections, console subassemblies, hanger subassemblies, a masking grid assembly, where, in use, the rear glass pane of the photovoltaic module is permanently joined with the flanges of the vertically oriented load-bearing aluminium T-sections the webs of the load-bearing T-sections each having two profiled hooks on both of their ends the console subassemblies are detachably joined with the hanger subassemblies and with a masking grid assembly placed between the photovoltaic module and the hanger subassemblies, each of the console subassemblies is made of a vertical metal L-section with a longer leg with vertically aligned profiled indents forming horizontal slots, the longer leg being sunk in a thermal insulation layer of the insulated front wall, and with a shorter leg fixed by means of fixing anchors and via a distance plate to a load-bearing wall of the insulated front wall, each longer leg being joined detachably with a hanger subassembly comprising a vertical metal T-section load-bearing post and two metal profiled hangers inserted in the profiled hooks, where in each web of the load-bearing post is fixed in the horizontal slots of the a corresponding L-section and is joined to the corresponding L-section detachably by means of screws, wherein each flange of the load-bearing post is detachably fixed between outer vertical offsets to vertical side offsets of two corresponding metal profiled hangers with a vibration-damping disposed loosely on the face of each metal profiled hanger to eliminate completely any vibrations between the metal profiled hangers and the load-bearing aluminium T-sections

The metal profiled hanger of the hanger subassembly has preferably a profile consisting of a middle U-shaped portion, both ends of which are provided with the vertical side offsets oriented perpendicularly to both rectangular walls of said U-shaped portion, said vertical side outer offsets being also provided with perpendicularly oriented outer vertical offsets with the gauge equal to width of the flange of the T-section load-bearing post and with their heights equalling the width of said flange.

Also, the building wall masking grid assembly preferably comprises metal profiled masking slats with the cross-section in the form of an isosceles trapezium with horizontal outer offsets, flat bottoms of which are fixed to the thermal insulation layer of the building face wall by means of self-drilling screws.

The lower profiled hooks of the webs of both load-bearing T-sections preferably have profiles formed by an open rectangular recess and a lower vertical rectangular slot, whereas the upper profiled hooks of the webs have profiles formed by a recess in the form of a right-angled trapezium and an upper vertical rectangular slot, both slots being situated in the same vertical plane.

The load-bearing T-sections are preferably joined permanently with the rear glass pane of the photovoltaic panel so that the webs of said load-bearing T-sections are situated at a distance L1 from vertical sides of the panel, said distance equalling from 1/4 to 1/5 of the whole length L of the photovoltaic panel.

The design solution of the set of structural elements suitable to detachably connect a photovoltaic module of a ventilated facade to an insulated front wall of a building comprising load-bearing T-sections with two profiled hooks according to the invention, allowed to develop a simple, compact, and versatile system structure of the frameless ventilated facade. The system with detachable fixing of the photovoltaic module to the inner structure of the facade by means of hooks has eliminated the necessity to employ metal frames and the use of metal fasteners, which makes the assembly process fast and easy. Versatility of the design offers the possibility to install the facade virtually without any restrictions on any building, either the existing or newly erected one, regardless of the shape of its face walls, arrangement of window and/or door openings, or materials used to construct the building.

Further, the structure of the set of internal structural elements connecting the photovoltaic module of the ventilated facade to the insulated front wall of the building, according to the invention, offers the possibility of using the available face wall surface areas to the maximum, by covering them with photovoltaic modules, and to utilise sunlit walls of the building as effectively as possible, whereas there is also possibility to employ photovoltaic modules with different external dimensions on a single face wall of the building. Another merit of the design solutions, according to the invention, consist in the minimised use of construction materials, and the use of frameless module results in less consumption of aluminium, whereas application of the gluing method to fasten the load-bearing T-shaped sections to the panels allows to eliminate the requirement for mechanical fasteners. Moreover, assembly of the facade according to the invention does not require the use of heavy construction equipment, as all its structural components, except for steel anchors, are made of aluminium. An important advantage of the set according to the invention are very good aesthetic properties of the ventilated facade with the frameless photovoltaic modules, which makes positive aesthetic and visual feelings, because such facade does not contain any mechanical connectors.

The proposed photovoltaic ventilated facade, together with its masking slat system, makes an impression of a uniform self-contained wholeness, which is impossible to obtain in the facades known in the art where mechanical fasteners and/or frames around glass panes are used. Further, innovativeness of the proposed set also consists in fixing the rear glass surface of the photovoltaic panel to the load-bearing T-shaped section by means of structural bonding with a silicone adhesive or double-sided adhesive tape. Further, employing the vibration-damping pad on the hook of the load-bearing T-shaped section of the photovoltaic panel in the hanger subassembly allowed to eliminate completely any vibrations between these elements.

The subject of the invention is illustrated by its exemplary embodiments in drawings, of which
Fig. 1 shows, in the front view, first version of the photovoltaic module for the ventilated facade, the vertical load-bearing T-sections of which are joined with its inner glass pane by means of a silicone adhesive and a spacing tape;
Fig. 2 - the same module in the vertical cross-section along the line A-A;
Fig. 3 - the same module with its components in a disassembled state, in the side view;
Fig. 4 - the same module in cross-section along the line B-B;
Fig. 5 - detail "R" of the same module with its components in a disassembled state, in the top view;
Fig. 6 - second version of embodiment of the photovoltaic module for the ventilated facade, with its vertical load-bearing T-sections joined with its inner glass pane by means of a double-sided adhesive tape, in the front view;
Fig. 7 - the same second version of the photovoltaic module in the cross-section along the line C-C;
Fig. 8 - the same version of the module with its components in a disassembled state, in the side view;
Fig. 9 - the same version of the module in cross-section along the line D-D;
Fig. 10 - detail "S" of the same module with its components in a disassembled state, in the top view;
Fig. 11 - a fragment of the ventilated photovoltaic facade mounted of the face wall of the building, a unit comprising four photovoltaic modules for the ventilated facade together with all other components of the facade combined functionally with each other and with the building wall, in the perspective view;
Fig. 12 - the same fragment of the photovoltaic facade with its photovoltaic module, aluminium grid, and the console-hanger subassembly in a disassembled state, in a perspective view, when viewed from the front;

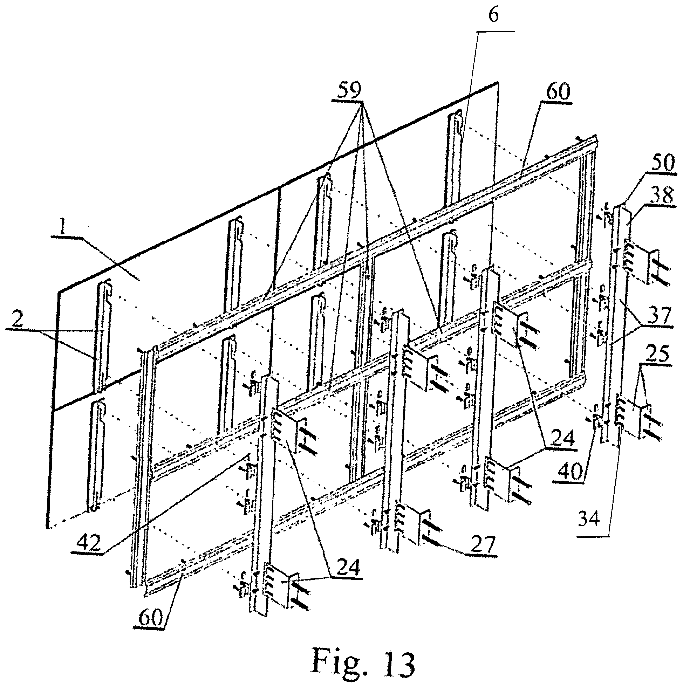

Fig. 13 - the same fragment of the photovoltaic facade in a disassembled state in the perspective view, when viewed from the back;

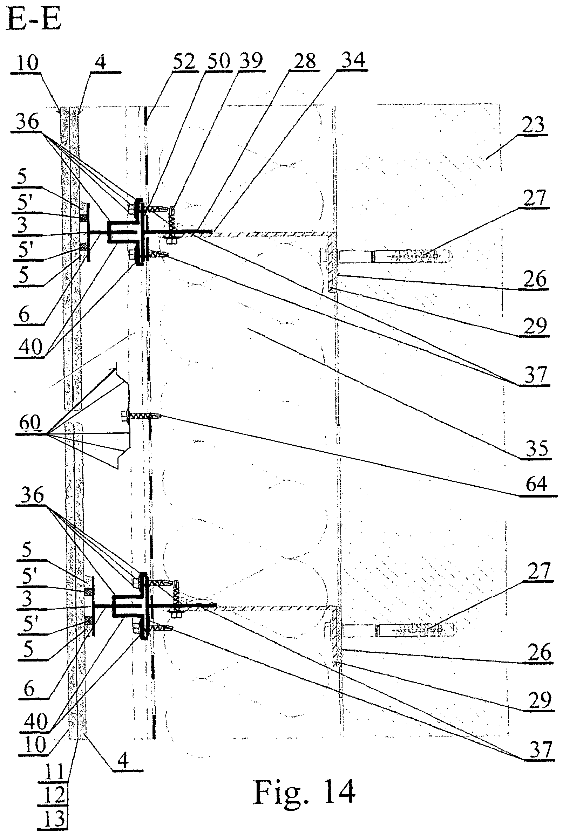

Fig. 14 - the same assembly with the first version of embodiment of its photovoltaic module in the cross-section along the line E-E of Fig. 10;

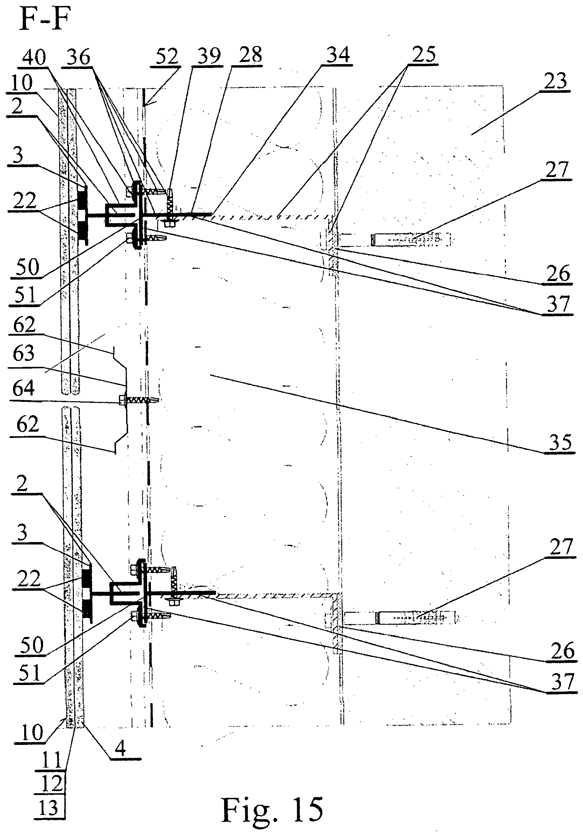

Fig. 15 - assembly similar to the second version of embodiment of its photovoltaic module in the horizontal cross-section along the line F-F;

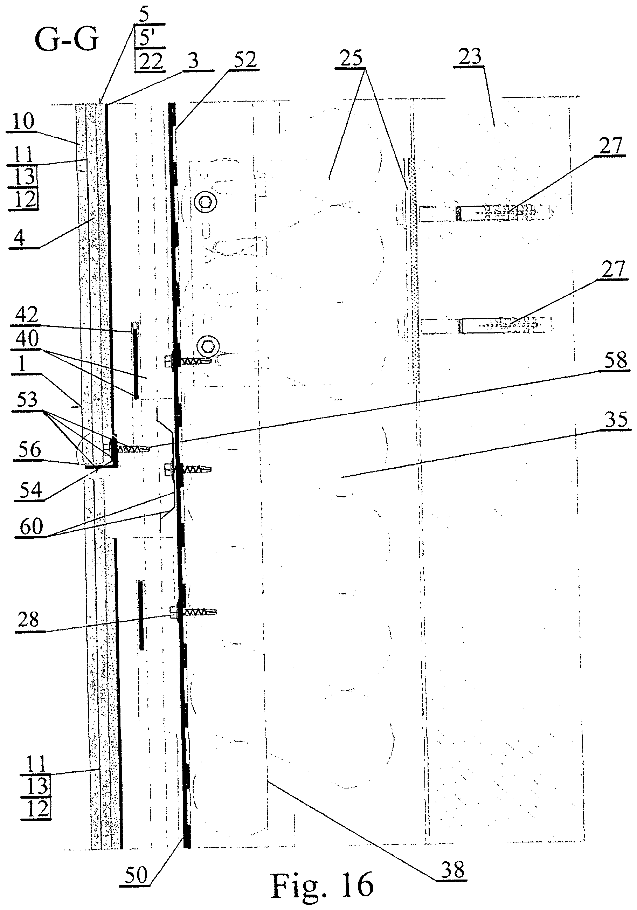

Fig. 16 - assembly with the first version of embodiment of its photovoltaic module in the vertical cross-section along the line G-G;

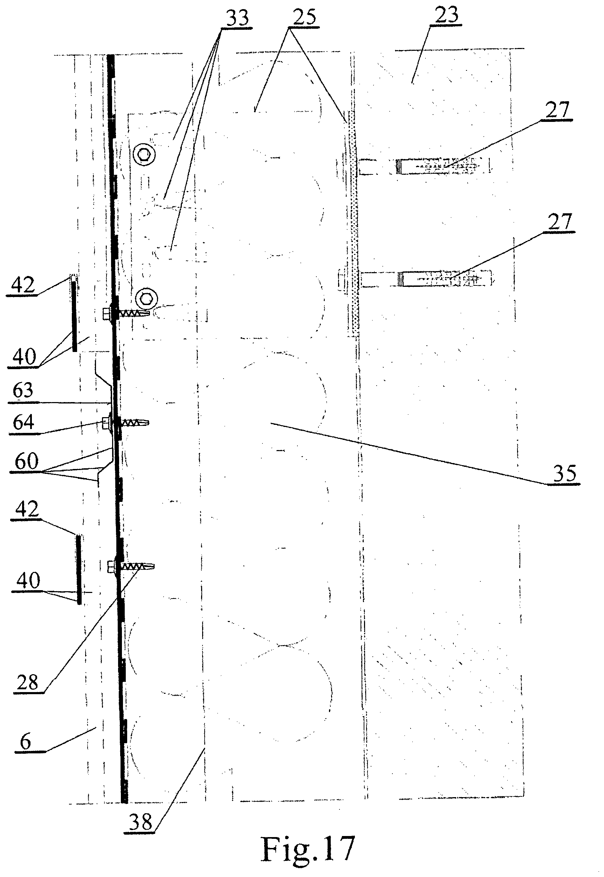

Fig. 17 - an inner structure of the ventilated facade together with its aluminium grid in the vertical cross-section along the plane of the aluminium grid;

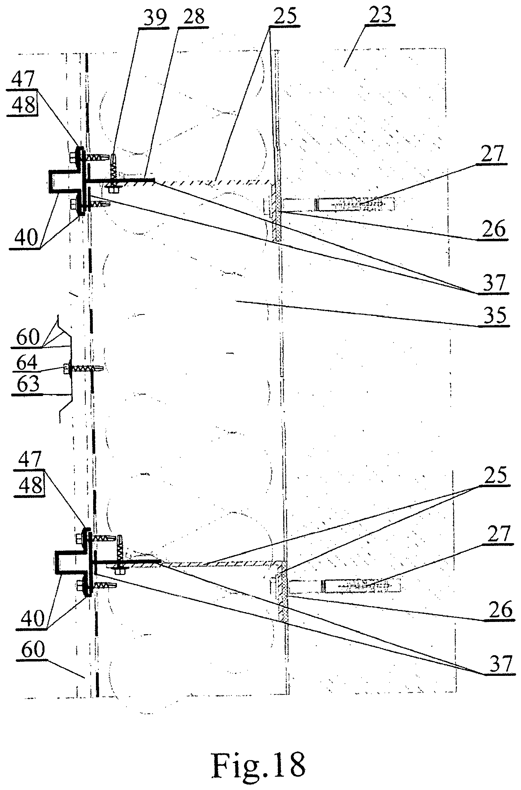

Fig. 18 - the same inner structure of the facade with its grid in the horizontal cross-section;

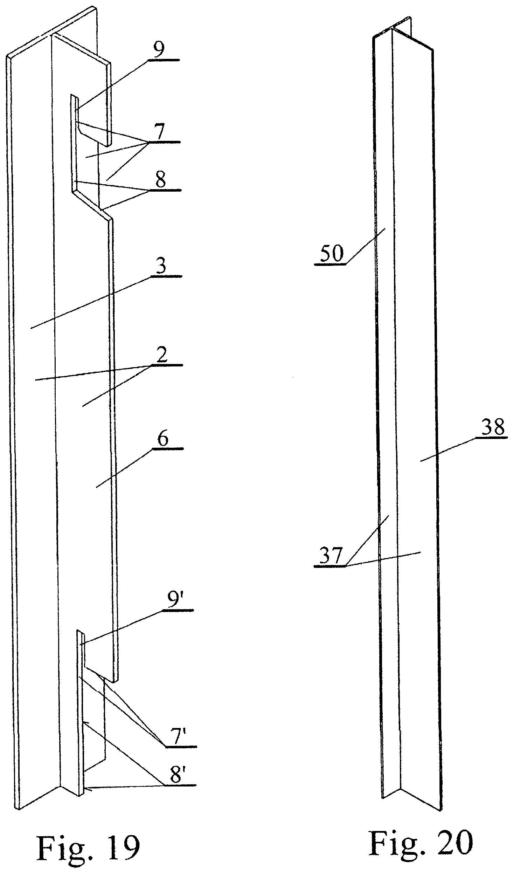

Fig. 19 - vertical load-bearing section of the photovoltaic module of the facade, in the perspective view;
Fig. 20 - a load-bearing post of the facade grid in the perspective view;

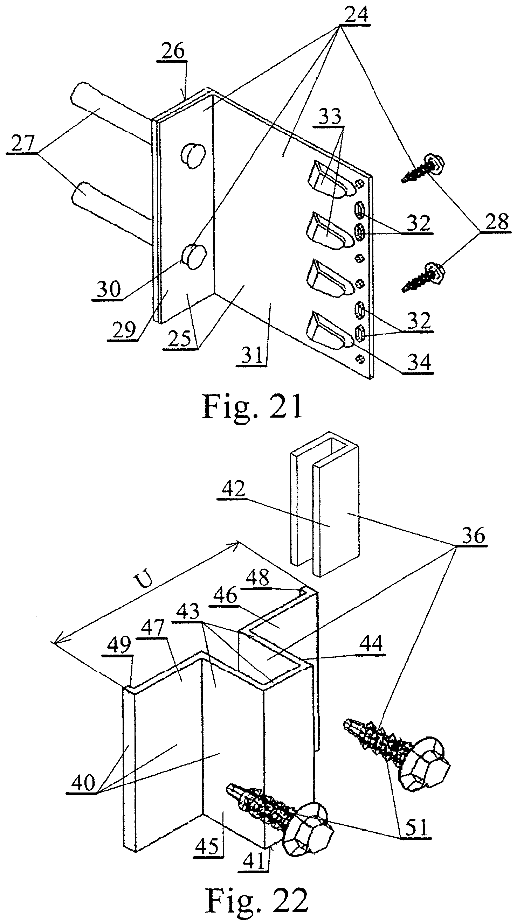

Fig. 21 - console subassembly with the spacer, fixing anchors and self-drilling screws joining the load-bearing post of the grid with the load-bearing structure of face wall of the building, in the perspective view;
Fig. 22 - a part of the profiled subassembly of the load-bearing hanger with a vibration-damping pad and self-drilling screws of the grid, in the perspective view;

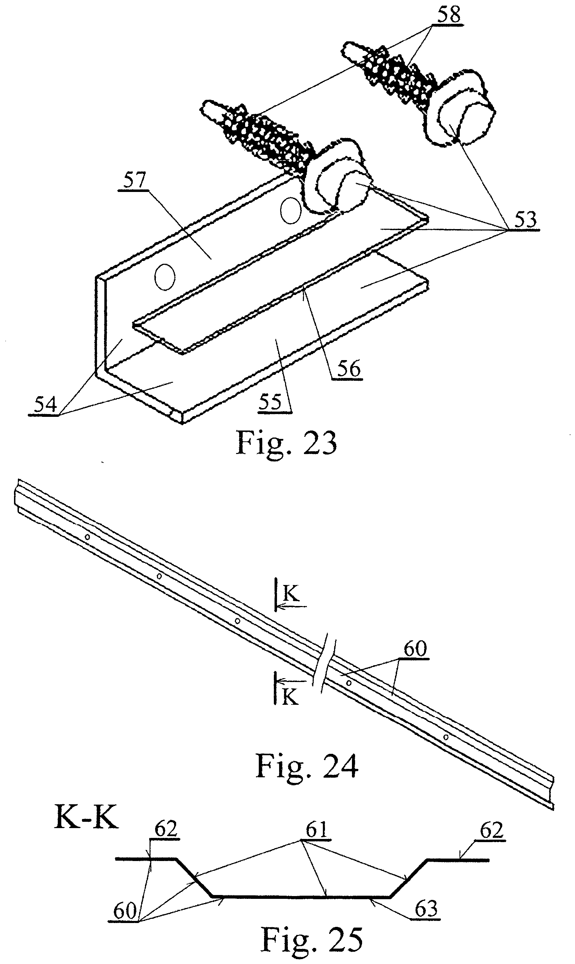

Fig. 23 - angle subassembly supporting the photovoltaic module of the facade, together with a membrane supporting its glass panes and with self-drilling screws,
Fig. 24 - masking slat on the perimeter of the aluminium grid assembly, together with the inner structure of the facade, in the perspective view; and
Fig. 25 - the same masking slat in cross-section along the line K-K.

A photovoltaic module for the ventilated facade constituting the front portion of the facade comprises a photovoltaic panel 1 in the form of a strongly flattened cuboid and two aluminium vertical load-bearing T-sections 2, the flanges 3 of which are joined permanently with the rear glass pane 4 of the panel by means of a silicone adhesive 5 with a high shear strength equal to 3.3 N/mm² and a high thermal resistance in the range from -50°C to +250°C, of the SIKA Sikasil SG500 type, and a spacing tape 5', with their webs 6 located at the distance L1 from both shorter sides of the panel pane equal to 1/5 of the whole panel length L, whereas the webs 6 of these load-bearing T-sections 2 are provided with the profiled hooks 7 and 7' on their ends, formed by a recesses 8 with a profile of a right-angled trapezium and a vertical slot-shaped recess 9, as well as a rectangular recess 8' and a vertical slot-shaped recess 9', respectively.

Further, photovoltaic panel 1 of the set comprises two rectangular glass panes, a front glass pane 10 and a rear glass pane 4, both with length L and height H, two laminating films 11 and 12 adhering to the said glass panes, and a set of forty perovskite photovoltaic cells 13 disposed between the said glass panes and separated from each other by conducting tracks 14 which are disposed on the surface of a rectangular area with external dimensions less than dimensions L and H of the panel, whereas all components of the panel are laminated together to form a monolith equipped with a rear left junction box 15 for the solar lead 16 constituting the negative pole with connector 17 of HC4 type, a rear right junction box 18 for the solar lead 19 constituting the positive pole with connector 20 of HC4 type, and a rear middle junction box 21 containing the by-pass diode protecting the photovoltaic cells 13. In this version of embodiment, a rear glass pane 4 with thickness of 1.8 mm and a front glass pane 10 with thickness of 0.5 mm were used, whereas both of the glass panes were made of chemically tempered glass with the mechanical strength increased by a factor of 2-4 with respect to ordinary glass.

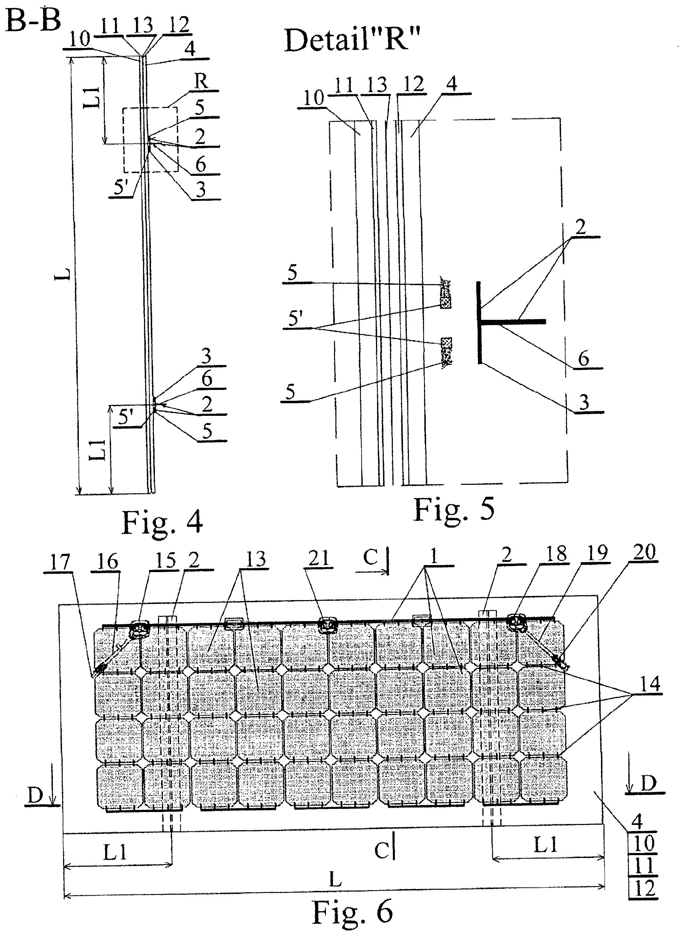

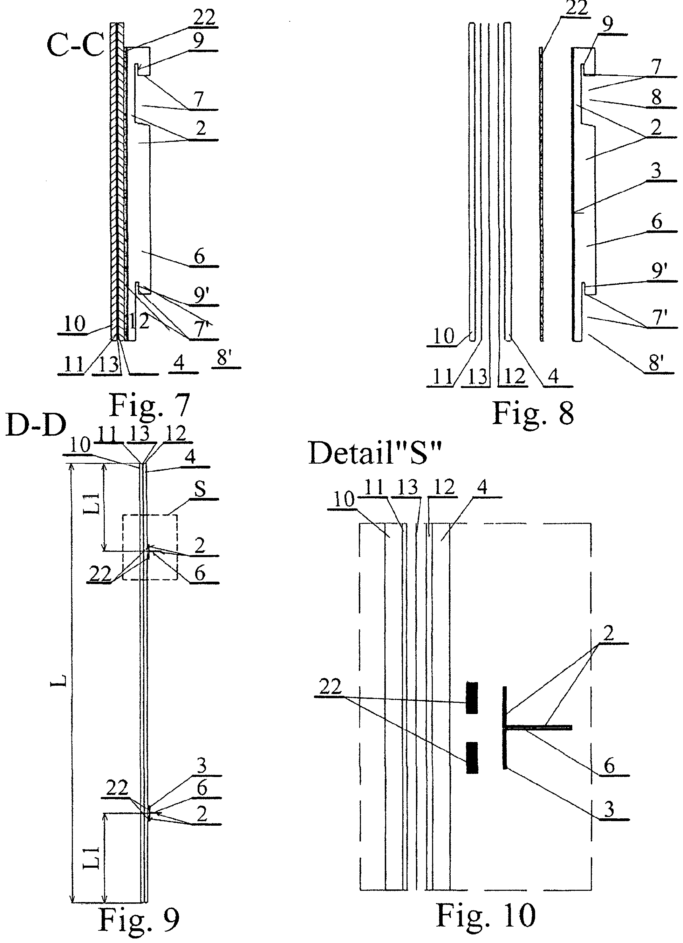

The photovoltaic module for the ventilated facade according to its second exemplary embodiment shown in Figs. 6-10 has a structure identical to this of the above-described module according to its first version, and the only difference between them consists in that the rear (inner) glass pane 4 of the photovoltaic panel 1 of the second version of the module is joined permanently with the flanges 3 of the load-bearing T-sections 2 of the module by means of acrylic double-sided adhesive tape 22 of 3M-VHB type, and the webs 6 of these load-bearing T-sections 2 are provided with profiled hooks 7 and 7' on their ends, and further, a set of forty dye-sensitised photovoltaic cells 13 is disposed between the glass panes 4 and 10.

Moreover, in this version of embodiment of the photovoltaic module for the ventilated facade, a rear glass pane 4 with thickness of 1.5 mm and a front glass pane 10 with thickness of 0.8 mm were employed, whereas both of the two glass panes were made of chemically tempered glass, including tempering by means of the ion-exchange method.

In further versions of embodiment of the photovoltaic module for the ventilated facade (not shown in figures), a set of sixty or seventy-two cells manufactured with the use of the metal wrap though (MWT) channel metallization technology or quantum dot cell (QDC) technology, respectively, was disposed between the rear glass pane 4 and the front glass pane 10, which were also made of a chemically tempered glass.

The above-described photovoltaic module for the ventilated facade constituting the front (outer) portion of this whole facade is fixed, by means of profiled hooks 7 provided in the webs 6 of vertical aluminium load-bearing T-sections 2, to the rear (inner) structure of the whole facade, to the structure of external load-bearing wall 23 of a building by means of inner components of said facade, which constitute its subassemblies and fastening elements, including:
- a console subassembly 24, comprising an aluminium vertical L-section 25 (unequal-leg angle), a distance plate 26, two fixing anchors 27 and two self-drilling screws 28, whereas the angle is provided with two holes 30 on its shorter leg 29, and on its longer leg 31 alongside and close to its outer vertical edge it is provided with holes 32 to accommodate the screws 28, and at a further distance from the edge it is provided with four trapezoidal indents 33 arranged vertically and in parallel to the edge, such indents forming horizontal slots 34, whereas the angle is imbedded in the thermal insulation layer 35 which is a mineral wool, and its shorter leg 29 adjacent to the distance plate 26 is fixed by means of fixing anchors 27 to the structure of the load-bearing wall 23 of the building;
- a hanger subassembly 36 comprising two aluminium T-section load-bearing posts 37, the webs 38 of which are inserted into the horizontal slots 34 of the vertical L-section 25 and are additionally joined with each other by means of self-drilling screws 28 penetrating the holes 32 of the angle, and an aluminium profiled hanger 40, with a vibration-damping pad 42 with a U-shaped profile placed loosely on its face 41, whereas such a monolithic hanger 40 has a profile formed by a middle U-shaped portion 43, both rectangular side walls 44 and 45 of which are provided with vertical side offsets 46 and 47 oriented perpendicularly to the side walls, said offsets being also provided with further rectangular outer vertical offsets 48 and 49 perpendicularly oriented to said walls, with the gauge U equal to the width of the flange 50 of the load-bearing post 37 and having a height equal to the thickness of flanges 50 of the load-bearing posts 37, whereas the flanges 50 of the load-bearing posts 37 are disposed between these offsets and fixed by means of self-drilling screws 51 screwed into both vertical side offsets 46 and 47 of the hanger 40 and further to the thermal insulation layer 35 through its front cement-lime mortar layer 52. On the hanger subassembly 36, fixed in this way to the structure of the load-bearing wall 23 of the building, and on vibration-damping pads 42 placed on the face 41, an U-shaped portion 43 of the profiled hanger 40, profiled hooks 7 and 7' of the load-bearing T-sections 2 of the photovoltaic panel 1 are detachably fixed. As a result of functional combination of the console subassembly 24 with the load-bearing wall 23 constituting a load-bearing structure of the building and the hanger subassembly 36, also the T-section load-bearing post 37 functioning as a load-bearing post of the facade has been permanently anchored to the load-bearing structure of the building;
- a supporting subassembly 53 of the photovoltaic panel 1 comprising a equal-leg angle 54, an aluminium membrane 56 disposed on a horizontal leg 55 of said angle, with lower sides of glass panes 4 and 10 of the photovoltaic panel 1 adhering to the angle and the vertical flange 57 fixed to the web 38 of the T-section load-bearing post 37 by means of self-drilling screws 58;
- a grid subassembly 59 masking the face wall o the building comprising profiled aluminium masking slats 60 with cross-section in the shape of isosceles trapezium 61 with horizontal outer offsets 62, flat bottoms 63 of the slats being fixed to the thermal insulation layer 35 of the building's face wall by means of self-drilling screws 64, whereas the masking slats 60 form the external rectangular profile of the photovoltaic module of the ventilated facade.

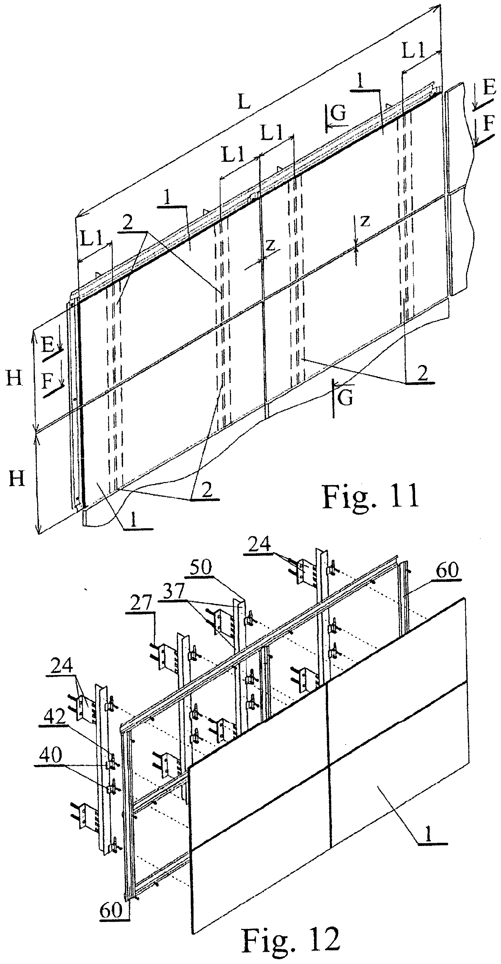

Photovoltaic modules for the ventilated facade containing a photovoltaic panel 1 with a number of photovoltaic cells 13 depending on the purpose of the panel and two aluminium load-bearing T-sections 2 joined permanently with the panel, are hanged on the hanger subassemblies 36 next to each other and spaced at intervals Z = 12 mm, arranged in parallel to each other in both vertical and horizontal rows, as shown in Fig 11. In another embodiment, the intervals Z between the modules were 2 mm, and the distance L1 from the webs 6 of the load-bearing T-sections 2 to the shorter sides of the photovoltaic panel 1 was equal to 1/4 of its whole length L.

### List of numerical designations in Figures

- 1: - photovoltaic panel
- 2: - panel, load-bearing T-sections
- 3: - load-bearing T-section flange
- 4: - panel, rear glass pane
- 5: - silicone adhesive
- 5': - spacing tape
- 6: - T-section web
- 7: - section web, upper profiled hook
- 7': - section web, lower profiled hook
- 8: - hook, trapezoidal profile recess
- 8': - hook, rectangular profile recess
- 9: - hook, slot-shaped recess
- 9': - hook, slot-shaped recess
- 10: - panel, front glass pane
- L: - panel length
- L1: - load-bearing section web-panel edge distance
- H: - panel height
- 11: - panel, laminating film
- 12: - panel, laminating film
- 13: - panel, photovoltaic cell
- 14: - conductive tracks between panel cells
- 15: - panel, left junction box
- 16: - panel, solar lead
- 17: - panel, solar lead connector
- 18: - panel, left junction box
- 19: - panel, solar lead
- 20: - panel, solar lead connector
- 21: - panel, middle junction box
- 22: - double-sided adhesive tape
- 23: - building face (external) wall
- 24: - console subassembly
- 25: - unequal angle
- 26: - distance plate
- 27: - fixing anchors
- 28: - self-drilling screws
- 29: - unequal angle, shorter leg
- 30: - unequal angle, shorter leg holes
- 31: - unequal angle, longer leg
- 32: - unequal angle, longer leg holes
- 33: - unequal angle, longer leg profiled piercing indents
- 34: - horizontal slots under profiled piercing indent
- 35: - building face wall, thermal insulation
- 36: - hanger subassembly
- 37: - facade subassembly, T-section load-bearing post
- 38: - T-section load-bearing posts, webs
- 39: - self-drilling screws
- 40: - profiled hanger, hanger subassembly
- 41: - profiled hanger, face
- 42: - vibration-damping pad
- 43: - profiled hanger, U-shaped portion
- 44: - hanger, side flange
- 45: - hanger, side flange
- 46: - hanger, side flange, outer offset
- 47: - hanger, side flange, outer offset
- 48: - offset 46, further offset
- 49: - offset 47, further offset
- 50: - T-section load-bearing post, flanges
- 51: - self-drilling screws
- 52: - thermal insulation, cement-lime mortar layer
- 53: - photovoltaic panel supporting subassembly
- 54: - equal-leg angle
- 55: - angle, horizontal leg
- 56: - aluminium membrane
- 57: - angle, vertical leg
- 58: - self-drilling screws
- 59: - facade masking grid
- 60: - masking slats
- 61: - masking slat, trapezium profile
- 62: - masking slat, trapezium profile, horizontal offsets
- 63: - masking slat, flat bottom

## Claims

1. A set of structural elements suitable to detachably connect a photovoltaic module of a ventilated facade to an insulated front wall of a building, comprising load-bearing aluminium T-sections (2), console subassemblies (24), hanger subassemblies (36), a masking grid assembly (59), where, in use, a rear glass pane (4) of the photovoltaic module is permanently joined with the flanges (3) of the vertically oriented load-bearing aluminium T-sections (2), the webs (6) of the load-bearing T-sections (2) each having two profiled hooks (7, 7') on both of their ends, the console subassemblies (24) are detachably joined with the hanger subassemblies (36) and with a masking grid assembly (59) placed between the photovoltaic module and the hanger subassemblies (36), each of the console subassemblies (24) is made of a vertical metal L-section (25) with a longer leg (31) with vertically aligned profiled indents (33) forming horizontal slots (34), the longer leg (31) being sunk in a thermal insulation layer (35) of the insulated front wall, and with a shorter leg (29) fixed by means of fixing anchors (27) and via a distance plate (26) to a load-bearing wall (23) of the insulated front wall, each longer leg (31) being joined detachably with a hanger subassembly (36) comprising a vertical metal T-section load-bearing post (37) and two metal profiled hangers (40) inserted in the profiled hooks (7, 7'), wherein each web (38) of the load-bearing post (37) is fixed in the horizontal slots (34) of the a corresponding L-section (25) and is joined to the corresponding L-section (25) detachably by means of screws (39), wherein each flange (50) of the load-bearing post (37) is detachably fixed between outer vertical offsets (48,49) to vertical side offsets (46, 47) of two corresponding metal profiled hangers (40) with a vibration-damping pad (42) disposed loosely on the face of each metal profiled hanger (40) to eliminate completely any vibrations between the metal profiled hangers (40) and the load-bearing aluminium T-sections (2).

2. The set according to claim 1 **characterised in that** the metal profiled hangers (40) of the hanger subasssemblies (36) have a profile consisting of a middle U-shaped portion (43), both ends of which are provided with the vertical side offsets (46, 47) oriented perpendicularly to both rectangular walls (44, 45) of said U-shaped portion, said vertical side offsets being also provided with perpendicularly oriented outer vertical offsets (48, 49) with a gauge (U) equal to the width of the flange (50) of the T-section load-bearing post (37) and with a height of the outer vertical offsets (48, 49) equalling the thickness of said flange.

3. The set according to claim 1 **characterised in that** the building wall masking grid assembly (59) comprises metal profiled masking slats (60), each with a cross-section in the form of an isosceles trapezoid (61) with horizontal outer offsets (62), a flat bottom (63) which is fixed to the thermal insulation layer (35) of the building face wall by means of self-drilling screws (64).

4. The set according to claim 1 **characterised in that** the lower profiled hooks (7') of the webs (6) of both load-bearing T-sections (2) have profile formed by an open rectangular recess (8') and a lower vertical rectangular slot (9'), whereas the upper profiled hooks (7) of the webs (6) have a profile formed by a recess (8) in the form of a right-angled trapezoid and an upper vertical rectangular slot (9), both slots being situated in the same vertical plane.

5. The set according to claim 1 **characterised in that** the load-bearing T-sections (2) are joined permanently with the rear glass pane (4) of the photovoltaic panel (1) so that the webs (6) of said load-bearing T-sections (2) are situated at a distance (L1) from vertical sides of the panel, said distance equalling from 1/4 to 1/5 of the whole length (L) of the photovoltaic panel (1).

## Patentansprüche

1. Ein Set von Strukturelementen, der geeignet ist, ein Photovoltaikmodul einer hinterlüfteten Fassade lösbar mit einer gedämmten Vorderwand eines Gebäudes zu verbinden, umfassend tragende Aluminium-T-Profile (2), Konsolen-Unterbaugruppen (24), Aufhänger-Unterbaugruppen (36), eine Abdeckgitterbaugruppe (59), wobei im Gebrauch eine hintere Glasscheibe (4) des Photovoltaikmoduls dauerhaft mit den Flanschen (3) der vertikal ausgerichteten tragenden Aluminium-T-Profile (2) verbunden ist, wobei die Stege (6) der tragenden T-Profile (2) an ihren beiden Enden jeweils zwei Profilhaken (7, 7') haben, wobei die Konsolen-Unterbaugruppen (24) lösbar mit den Aufhänger-Unterbaugruppen (36) und mit einer zwischen dem Photovoltaikmodul und den Aufhänger-Unterbaugruppen (36) angeordneten Abdeckgitterbaugruppe (59) verbunden sind, wobei jede der Konsolen-Unterbaugruppen (24) aus einem vertikalen Metall-L-Profil (25) mit einem längeren Schenkel (31) mit vertikal ausgerichteten profilierten Vertiefungen (33) besteht, die horizontale Schlitze (34) bilden, wobei der längere Schenkel (31) in einer Wärmedämmschicht (35) der gedämmten Vorderwand versenkt ist, und mit einem kürzeren Schenkel (29), der mittels Befestigungsankern (27) und über eine Distanzplatte (26) an einer tragenden Wand (23) der gedämmten Vorderwand befestigt ist, wobei jeder längere Schenkel (31) lösbar mit einer Aufhänger-Unterbaugruppe (36) verbunden ist, die einen vertikalen tragenden T-Profil-Pfosten (37) aus Metall und zwei in die Profilhaken (7, 7') eingesetzt sind, wobei jeder Steg (38) des tragenden Pfostens (37) in den horizontalen Schlitzen (34) des entsprechenden L-Profils (25) befestigt und mit dem entsprechenden L-Profil (25) mittels Schrauben (39) lösbar verbunden ist, wobei jeder Flansch (50) des tragenden Pfostens (37) zwischen vertikalen Außenversätzen (48, 49) zu vertikalen Seitenversätzen (46, 47) von zwei entsprechenden Metallprofilhängern (40) lösbar befestigt ist, wobei ein schwingungsdämpfendes Kissen (42) lose auf der Fläche jedes Metallprofilhängers (40) angeordnet ist, um jegliche Schwingungen zwischen den Metallprofilhängern (40) und den tragenden Aluminium-T-Profilen (2) vollständig zu beseitigen.

2. Der Set nach Anspruch 1 **dadurch gekennzeichnet, dass** die Metallprofilhänger (40) der Aufhänger-Unterbaugruppen (36) ein Profil haben, das aus einem mittleren U-förmigen Abschnitt (43) besteht, dessen beide Enden mit vertikalen Seitenversätzen (46, 47) vorgesehen sind, die senkrecht zu den beiden rechteckigen Wänden (44, 45) des U-förmigen Abschnitts ausgerichtet sind, wobei die vertikalen Seitenversätze auch mit senkrecht ausgerichteten vertikalen Außenversätzen (48, 49) vorgesehen sind, wobei die Breite (U) gleich der Breite des Flansches (50) des tragenden T-Profil-Pfostens (37) ist und die Höhe der vertikalen Außenversätze (48, 49) gleich der Dicke des Flansches ist.

3. Der Set nach Anspruch 1 **dadurch gekennzeichnet, dass** die Abdeckgitterbaugruppe (59) der Gebäudewand metallische profilierte Abdecklamelle (60) umfasst, die jeweils einen Querschnitt in Form eines gleichschenkligen Trapezes (61) mit horizontalen Außenversätzen (62) und einen flachen Boden (63) aufweisen, der mittels selbstbohrender Schrauben (64) an der Wärmedämmschicht (35) der Gebäudefassade befestigt ist.

4. Der Set nach Anspruch 1 **dadurch gekennzeichnet, dass** die unteren Profilhaken (7') der Stege (6) der beiden tragenden T-Profile (2) ein Profil haben, das durch eine offene rechteckige Aussparung (8') und einen unteren senkrechten rechteckigen Schlitz (9') gebildet wird, während die oberen Profilhaken (7) der Stege (6) ein Profil haben, das durch eine rechtwinklige trapezförmige Aussparung (8) und einen oberen vertikalen rechteckigen Schlitz (9) gebildet wird, wobei beide Schlitze in der gleichen vertikalen Ebene liegen.

5. Der Set nach Anspruch 1 **dadurch gekennzeichnet, dass** die tragenden T-Profile (2) dauerhaft mit der hinteren Glasscheibe (4) der Photovoltaikplatte (1) verbunden sind, so dass die Stege (6) der tragenden T-Profile (2) in einem Abstand (L1) von den vertikalen Seiten der Platte angeordnet sind, wobei der Abstand 1/4 bis 1/5 der Gesamtlänge (L) der Photovoltaikplatte (1) beträgt.

## Revendications

1. Ensemble d'éléments structurels permettant de raccorder de manière amovible un module photovoltaïque d'une façade ventilée à un mur frontal isolé d'un bâtiment, comprenant des profilés en T porteurs en aluminium (2), des sous-ensembles de consoles (24), des sous-ensembles de suspentes (36), un ensemble de grilles d'occultation (59), où, lors de l'utilisation, une vitre arrière (4) du module photovoltaïque est reliée de façon permanente aux brides (3) des profilés en T porteurs en aluminium (2) orientés verticalement, les âmes (6) des profilés en T porteurs (2) ayant chacune deux crochets profilés (7, 7') à chacune de leurs extrémités, les sous-ensembles de console (24) sont reliés de manière amovible aux sous-ensembles de suspension (36) et à un ensemble de grille de masquage (59) placé entre le module photovoltaïque et les sous-ensembles de suspension (36), chacun des sous-ensembles de console (24) est constitué d'un profilé métallique vertical en L (25) avec une jambe plus longue (31) avec des empreintes profilées alignées verticalement (33) formant des fentes horizontales (34), la jambe la plus longue (31) étant enfoncée dans une couche d'isolation thermique (35) de la paroi frontale isolée, et avec un pied plus court (29) fixé au moyen d'ancrages de fixation (27) et par l'intermédiaire d'une plaque d'écartement (26) à une paroi porteuse (23) de la paroi avant isolée, chaque pied plus long (31) étant relié de manière amovible à un sous-ensemble de suspension (36) comprenant un poteau porteur vertical métallique en T (37) et deux suspensions profilées métalliques (40) insérées dans les crochets profilés (7, 7'), dans lequel chaque paroi (38) du poteau porteur (37) est fixée dans les fentes horizontales (34) du profilé en L correspondant (25) et est reliée au profilé en L correspondant (25) de manière amovible au moyen de vis (39), dans lequel chaque bride (50) du montant porteur (37) est fixée de manière amovible entre les décalages verticaux extérieurs (48, 49) et les décalages latéraux verticaux (46, 47) de deux suspensions profilées métalliques correspondantes (40) avec un tampon antivibrations (42) disposé librement sur la face de chaque suspension profilée métallique (40) afin d'éliminer complètement toute vibration entre les suspensions profilées métalliques (40) et les profilés en T porteurs en aluminium (2).

2. L'ensemble selon la revendication 1 **caractérisé par le fait que** les cintres profilés métalliques (40) des sous-ensembles de cintres (36) ont un profil constitué d'une partie centrale en forme de U (43), dont les deux extrémités sont pourvues de décalages latéraux verticaux (46, 47) orientés perpendiculairement aux deux parois rectangulaires (44, 45) de ladite partie en U, lesdits décalages latéraux verticaux étant également pourvus de décalages verticaux extérieurs (48, 49) orientés perpendiculairement, avec un écartement (U) égal à la largeur de l'aile (50) du poteau porteur en T (37) et avec une hauteur des décalages verticaux extérieurs (48, 49) égale à l'épaisseur de ladite aile.

3. L'ensemble selon la revendication 1, **caractérisé par le fait que** la grille de masquage du mur du bâtiment (59) comprend des lames de masquage profilées en métal (60), chacune ayant une section transversale en forme de trapèze isocèle (61) avec des décalages extérieurs horizontaux (62), un fond plat (63) qui est fixé à la couche d'isolation thermique (35) du mur de la façade du bâtiment au moyen de vis autoperceuses (64).

4. L'ensemble selon la revendication 1 **caractérisé en ce que** les crochets profilés inférieurs (7') des bandes (6) des deux sections en T porteuses (2) ont un profil formé par un renfoncement rectangulaire ouvert (8') et une fente rectangulaire verticale inférieure (9'), tandis que les crochets profilés supérieurs (7) des bandes (6) ont un profil formé par un renfoncement (8) en forme de trapèze à angle droit et une fente rectangulaire verticale supérieure (9), les deux fentes étant situées dans le même plan vertical.

5. L'ensemble selon la revendication 1 **caractérisé par le fait que** les profilés en T porteurs (2) sont reliés de façon permanente à la vitre arrière (4) du panneau photovoltaïque (1) de sorte que les parois (6) desdits profilés en T porteurs (2) sont situées à une distance (L1) des côtés verticaux du panneau, cette distance étant égale à 1/4 à 1/5 de la longueur totale (L) du panneau photovoltaïque (1).
